# EUROPÄISCHE PATENTSCHRIFT

(11) **EP 2 537 204 B1**
(45) Veröffentlichungstag und Bekanntmachung des Hinweises auf die Patenterteilung: **13.01.2016**
(21) Anmeldenummer: 11704768.8
(22) Anmeldetag: 16.02.2011
(51) Int. Cl.: H01M 10/0525, H01M 10/617, H01M 10/625, H01M 10/64, H01M 10/653, H01M 10/6551, H01M 10/6555

(54) **WÄRMEABLEITER UND ELEKTRISCHER ENERGIESPEICHER**
HEAT SINK AND ELECTRICAL ENERGY STORAGE MEANS
DISSIPATEUR DE CHALEUR ET ACCUMULATEUR D'ÉNERGIE ÉLECTRIQUE

(30) Priorität: 16.02.2010 DE 102010002000
(43) Veröffentlichungstag der Anmeldung: 26.12.2012
(73) Patentinhaber: SGL Carbon SE, 65201 Wiesbaden (DE)
(72) Erfinder: SCHMITT, Rainer, 86157 Augsburg (DE); ÖTTINGER, Oswin, 86405 Meitingen (DE); WURM, Calin, 86405 Meitingen (DE); HUDLER, Bastian, 86641 Rain (DE); LANGER, Werner, 86450 Hegnenbach (DE)
(86) Internationale Anmeldenummer: PCT/EP2011/052317
(87) Internationale Veröffentlichungsnummer: WO 2011/101391

(56) Entgegenhaltungen:
- WO-A1-2009/041561
- DE-A1- 10 060 838
- DE-A1-102008 034 862
- DE-B- 1 253 130
- US-A- 4 265 952
- US-A1- 2002 061 436
- Sgl Carbon Gmbh: "Produkte aus flexibler Graphitfolie", , 31 January 2011 (2011-01-31), pages 1-32, XP055125242, Retrieved from the Internet: URL:http://www.sglgroup.com/cms/_common/do wnloads/products/product-groups/eg/automot ive-and-industrial-gaskets-made-of-flexibl e-graphite/SIGRAFLEX_Uebersicht_d.pdf [retrieved on 2014-06-25]
- ANONYMOUS: "SIGRAFLEX Produkte aus flexibler Graphitfolie", 19970101, 1 January 1997 (1997-01-01), pages 1,3,9-10, XP002617516,

## Beschreibung

Die Erfindung betrifft einen einen elektrischen Energiespeicher nach dem Oberbegriff des Anspruchs 1.

Aus der US 2006/0134514 A1 ist eine Traktionsbatterie für elektrische Fahrzeuge mit einer Vielzahl von in einem Gehäuse angeordneten, elektrisch miteinander verschalteten Batteriezellen bekannt. Durch die bei derartigen Batterien üblichen Lade-Entlade-Zyklen während des Betriebs wird in den Batteriezellen Wärme erzeugt. Nachteilig für die Lebensdauer und Zuverlässigkeit der Batteriezellen sind insbesondere sogenannte Hotspots, also lokal konzentrierte Überhitzungspunkte, welche im ungünstigsten Fall die betreffende Batteriezelle zerstören können. Um dieses Problem zu beheben, sind an Seitenflächen und insbesondere zwischen benachbarten Seitenflächen der Batteriezellen Folien oder Platten aus einem Material mit einer Wärmeleitfähigkeit in Flächenrichtung von mehr als 250 W/(m K) und in Dickenrichtung von weniger als 20 W/(m K) angeordnet. Die Folien oder Platten können aus Graphit bestehen.

Ein Beispiel für eine solche graphithaltige Folie oder Platte offenbart die EP 0 806 805 B1, welche ein Batteriesystem mit einem Wärmeleiter betrifft. Die Wärmeleitfunktion des Wärmeleiters wird dort durch graphithaltige Faserwerkstoffe bereitgestellt.

Zudem offenbart die US 2002/0061436 A1 eine Batterieanordnung mit einem aus einem Flachmaterial bestehenden Wärmeableiter. Als Materialien werden dabei Metalle und keramische Materialien und auch expandierter Graphit genannt.

Es hat sich inzwischen herausgestellt, dass obige Batteriezellen aufgrund der ständigen Lade- und Entladezyklen im Betrieb eine hohe Dickenänderung aufweisen, bei Lithium-lonen-Batteriezellen beispielsweise zwischen 0,5 bis 10 %. Um bei obigen Graphitplatten oder -folien die angegebene starke Anisotropie der Wärmeleitfähigkeit in Flächen- und Dickenrichtung zu erreichen, muss der Graphit eine sehr hohe Dichte aufweisen, typischerweise von mehr als 1,5 g/cm³. Derartig hochverdichtete Graphitfolien bzw. -platten sind jedoch sehr fest und nur wenig kompressibel und elastisch, können also bei einer Volumenausdehnung der miteinander verspannten Batteriezellen wenig nachgeben. Bei der nachfolgenden Volumenverringerung, bei der sich die Abstände zwischen den Batteriezellen wieder vergrößern, können die hierdurch entstehenden Freiräume von den Platten nicht wieder aufgefüllt werden. Hierdurch entstehen einerseits große mechanische Spannungen und andererseits eine schlechte Kontaktierung der Seitenflächen der Batteriezellen. Gerade in letzterem Fall kann aufgrund schlechter oder gänzlich fehlender Verbindung der Platten zu den Batteriezellen nicht sichergestellt werden, dass die durch Hotspots entstehende Wärme schnell in Flächenrichtung der Platten verteilt wird. Darüber hinaus kann bei einem dauerhaft hohen Wärmeeintrag in die Platten aufgrund deren begrenzter Wärmespeicherfähigkeit die Wärme der Hotspots nicht mehr ausreichend schnell verteilt werden.

Es ist deshalb Aufgabe der Erfindung, einen Energiespeicher mit einem verbesserten Wärmeableiter bereitzustellen, welcher die oben genannten Nachteile überwindet und eine gleichmäßige Wärmeverteilung an den Batteriezellen sowie die Abführung von überschüssiger Wärmeenergie ermöglicht.

Diese Aufgabe wird durch einen elektrischen Energiespeicher mit den Merkmalen des Anspruchs 1 gelöst. Vorteilhafte Weiterbildungen und bevorzugte Ausgestaltungen des Wärmeableiters sowie des Energiespeichers sind in den Unteransprüchen angegeben.

Ein eingangs genannter Wärmeableiter sowie elektrischer Energiespeicher sind dadurch gekennzeichnet, dass das graphithaltige Flachmaterial des Wärmeableiters Graphitexpandat enthält. Hierdurch kann eine gute Wärmeleitfähigkeit in Flächenrichtung bei gleichzeitiger guter Anpassungsfähigkeit an Volumenänderungen der Batteriezellen in beiden Richtungen - Volumenausdehnung und Volumenverringerung - bereitgestellt werden. Zudem lässt sich das graphithaltige Flachmaterial des Wärmeableiters besonders gut an unterschiedlichste Formen von Batteriezellen anpassen.

Dabei weist das Flachmaterial eine Dichte von 0,6-1,4 g/cm³, bevorzugt von 0,7-1,3 g/cm³ und besonders bevorzugt von 0,9-1,1 g/cm³ wie etwa vorteilhafte 1,0 g/cm³ auf. Zudem weist das Flachmaterial eine Wärmeleitfähigkeit in Flächenrichtung von 120-240 W/(m K), bevorzugt von 130-230 W/(m K) und besonders bevorzugt von 180-190 W/(mK) auf.

Weiterhin weist das Flachmaterial in Dickenrichtung eine Rückfederung von 0,5-15%, bevorzugt von 1-10% und besonders bevorzugt von 4-10%, bezogen auf seine Ausgangsdicke, auf, wodurch sich der Wärmeableiter bei einer Volumenverringerung der Batteriezellen in den freiwerdenden Raum ausbreiten kann. Unter Ausgangsdicke ist hierbei die Dicke des Flachmaterials ohne äußeren Flächendruck zu verstehen, also im nicht komprimierten oder verspannten Zustand vor der Montage des Energiespeichers. Hierdurch kann eine gut wärmeleitende, dauerhafte Verbindung zwischen Batteriezellen und Wärmeableiter sichergestellt werden.

Dabei weist das Flachmaterial in Dickenrichtung eine Kompressibilität von 1-50%, bevorzugt von 5-35%, besonders bevorzugt von 7-30% und ganz besonders bevorzugt von 10-20%, bezogen auf seine Ausgangsdicke, auf, wodurch der Wärmeableiter bei einer Volumenausdehnung der Batteriezellen nachgeben kann.

Erfindungsgemäss weist der elektrische Energiespeicher einen Wärmeableiter aus einem Flachmaterial auf, wobei das Flachmaterial aus einem vor der Verdichtung gebildeten Gemisch aus weitgehend gleichmäßig vermischten Graphitexpandat und Kunststoffpartikeln besteht.

In einer weiteren alternativen Ausführung kann das Flachmaterial mit nach der Verdichtung aufgebrachtem Kunststoff oberflächlich oder bis in den Kernbereich des Flachmaterials imprägniert sein. Durch diese Ausführungen lassen sich vorteilhaft formstabile und leicht handhabbare Wärmeableiter ausformen. Vorteilhaft können als Kunststoffe Thermoplaste, Duroplaste oder Elastomere verwendet werden, insbesondere Fluorpolymer, PE, PVC, PP, PVDF, PEEK, Benzoaxine und/oder Epoxidharze.

Weist das Flachmaterial vorteilhaft zumindest an einer zur Verbindung mit einem Kühlmodul vorgesehen Stirnseite eine Metallbeschichtung auf, so kann der Wärmeableiter angelötet werden. Des Weiteren kann zumindest ein Teilbereich zumindest einer Hauptfläche des Flachmaterials mit einer Metallbeschichtung versehen sein. Dies ist beispielsweise bei vollflächig mit einer Metallbeschichtung versehenem Flachmaterial der Fall.

In einer bevorzugten Ausführung kann das Flachmaterial trogförmig mit offenen oder geschlossenen kurzen Seiten geformt sein, so dass einerseits eine gut wärmeleitende, großflächige Verbindung mit einem Kühlmodul eines Energiespeichers und andererseits eine leichte Handhabbarkeit des Wärmeableiters und Einstellbarkeit von Batteriezellen in den Wärmeableiter ermöglicht werden. In einer alternativen Ausführung kann das Flachmaterial wellen- oder mäanderförmig, wabenähnlich oder in Form einer 8 geformt sein, wodurch eine gute, großflächige Anlage an die Batteriezellen bei gleichzeitig schneller Montage des Wärmeableiters im Energiespeicher ermöglicht wird.

Bevorzugt kann der oder die Wärmeableiter des Energiespeichers wie oben und nachfolgend beschrieben ausgebildet sein. Um einen guten Wärmeübergang zwischen einer Batteriezelle zu ermöglichen, kann diese vorteilhaft von einem an ihre Außenkontur angepassten Wärmeableiter umgeben sein. Beispielsweise können der oder die Wärmeableiter bei quaderförmigen Batteriezellen trogförmig, bei im Querschnitt sechseckigen Batteriezellen wabenförmig, bei runden Batteriezellen wellenförmig oder in Form einer 8 geformt sein, um eine gute, möglichst großflächige Anschmiegung des oder der Wärmeableiter an die Außenflächen der Batterizellen zu ermöglichen. In einer Ausführung der Erfindung kann der Energiespeicher mehrere, im wesentlichen quaderförmige Batteriezellen enthalten, wobei das Flachmaterial des oder der Wärmeableiter zwischen benachbarten Außenflächen zumindest einiger benachbarter Batteriezellen angeordnet ist.

In einer weiteren Ausführung können Stirnseiten und oder Teilflächen des Flachmaterials des oder der Wärmeableiter mit einem Kühlmodul des Energiespeichers wärmeleitend verbunden sein, wodurch auf vorteilhafte Weise von den Batteriezellen in die Wärmeleiter eingetragene Wärme aus dem Energiespeicher abgeführt werden kann. Vorteilhaft kann der Boden oder ein Teil des Bodens des Energiespeichers aus dem Kühlmodul gebildet sein, wodurch die Anbindung der Wärmeableiter an das Kühlmodul einfach ermöglicht wird. In einer für einen möglichst großen Wärmeübergang vorteilhaften Ausführung sind der oder die trogförmige Wärmeableiter mit ihren Trogböden mit dem Bodenteil respektive Kühlmodul wärmeleitend verbunden. Auch können vorteilhaft Innenwände eines Gehäuses des Energiespeichers mit dem erfindungsgemäßen Flachmaterial ausgekleidet sein, das bündig mit entsprechenden Seitenflächen der Batteriezellen kontaktiert, um eine zusätzliche Wärmeableitung vorzusehen.

Vorteilhaft kann der Boden einer durch die einander zugewandten Seitenflächen der Wärmeableiter gebildeten mittleren Tasche auch mit einem Wärmeableiter versehen sein, um eine schnelle Wärmeverteilung und -ableitung von Wärmeenergie auch auf der unteren Stirnseite der mittleren Batteriezelle bereitzustellen. Ebenso kann vorteilhafterweise in einer Ausführung ein Boden zwischen Wärmeableitern zur besseren Anpassung der Batteriezelle an das Kühlmodul und zur besseren Wärmeabfuhr mit passenden Streifen aus Wärmeableiter oder durchgängig mit einem Wärmeableiter versehen werden.

Vorteilhaft kann das Flachmaterial des oder der Wärmeableiter zur sicheren wärmeleitenden Verbindung des Flachmaterials an den Batteriezellen so ausgebildet sein, dass es sich bei einer Volumenverringerung der Batteriezellen ausdehnt und bei einer Volumenausdehnung der Batteriezellen nachgibt. Um die erst im Betrieb der Batteriezellen auftretende Volumenausdehnung zu ermöglichen, können die Wärmeableiter und die Batteriezellen im betriebslosen Zustand des Energiespeichers vorteilhaft so miteinander verspannt werden, das das Flachmaterial des oder der Wärmeableiter in Dickenrichtung nur schwach, bevorzugt um höchstens 1% bezogen auf seine Ausgangsdicke, komprimiert ist.

Vorteilhaft können oben und nachfolgend beschriebene erfindungsgemäße Wärmeableiter in elektrischen Energiespeichern mit Lithium-lonen-Batteriezellen verwendet werden, wobei durch die Verwendung der kompressiblen und rückfedernden Wärmeableiter eine federnde, mechanische Vorspannungsvorrichtung zum Verspannen der Batteriezellen im Energiespeicher nicht mehr notwendig ist. Weitere Besonderheiten und Vorzüge der Erfindung ergeben sich aus der tolgenden Beschreibung von bevorzugten Ausführungsbeispielen anhand der Zeichnungen. Es zeigen:
- **Fig. 1**: eine schematische dreidimensionale Ansicht eines erfindungsgemäßen elektrischen Energiespeichers;
- **Fig. 2**: einen Längsschnitt durch eine zweite erfindungsgemäße Ausführung des Energiespeichers;
- **Fig. 3**: einen Längsschnitt durch eine dritte erfindungsgemäße Ausführung des Energiespeichers;
- **Fig. 4**: eine Draufsicht auf eine vierte erfindungsgemäße Ausführung des Energiespeichers;
- **Fig. 5**: eine Draufsicht auf eine fünfte erfindungsgemäße Ausführung des Energiespeichers;
- **Fig. 6**: eine Draufsicht auf eine sechste erfindungsgemäße Ausführung des Energiespeichers;
- **Fig. 7**: einen Querschnitt durch verschiedene erfindungsgemäße Ausführungen von Wärmeableitern.

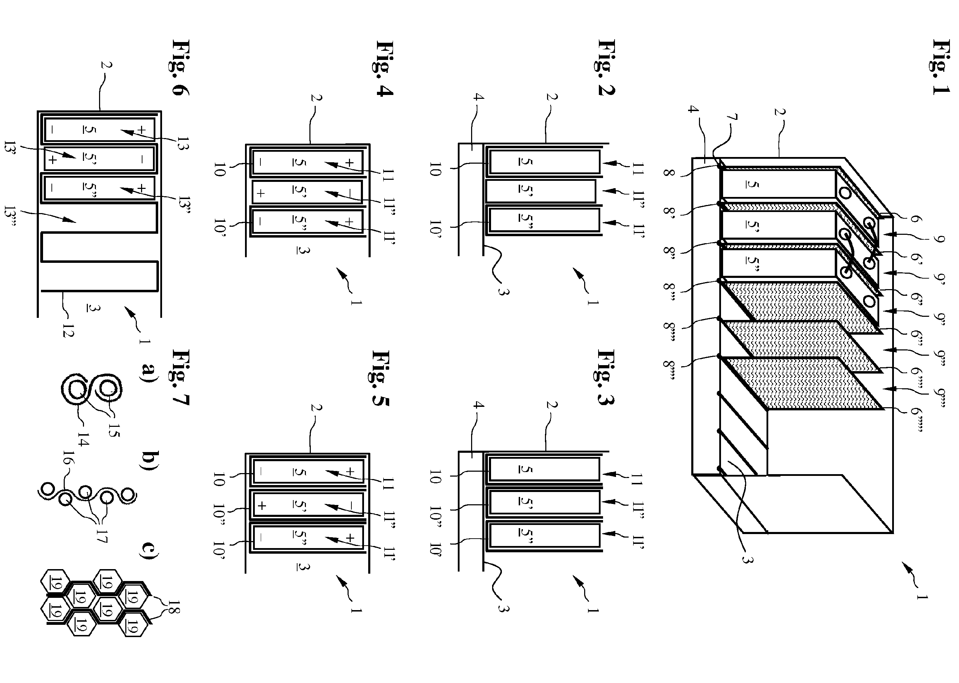

Ein in Fig. 1 in teilsweise aufgebrochener, schematischer dreidimensionaler Darstellung gezeigter elektrischer Energiespeicher 1 weist ein im Wesentlichen kastenförmiges Gehäuse 2 mit einem Gehäuseboden 3 auf. Der Gehäuseboden wird durch ein in Fig. 1 schematisch dargestelltes Kühlmodul 4 gebildet, das ein aktives oder passives Kühlmodul sein kann und aus einem Material mit guter thermischer Leitfähigkeit und möglichst guter Wärmespeicherkapazität besteht, z.B. Aluminium. Das Kühlmodul 4 kann vorzugsweise in Fig. 1 nicht dargestellte Kühlrippen und/oder Kanäle zur Durchleitung eines Kühlmediums, beispielsweise Wasser, aufweisen. Das Gehäuse 2 ist vollständig mit Lithium-lonen-Batteriezellen bestückt, wobei in Fig. 1 aus Gründen der besseren Darstellbarkeit nur drei Batteriezellen 5, 5', 5" gezeigt sind.

Zwischen in Fig. 1 linker Seitenwand des Gehäuses 2 und der benachbarten Batteriezelle 5 sowie zwischen den benachbarten 5 und 5' bzw. 5' und 5" sind Wärmeableitern 6 bzw. 6' und 6" eingefügt. Weiter sind in Fig. 1 Wärmeableiter 6", 6"" und 6"'" gezeigt, weitere Wärmeableiter sind aus Gründen der besseren Darstellbarkeit nicht gezeichnet.

Die Wärmeableiter 6 bis 6"'" bestehen aus einem Flachmaterial aus verfestigtem, expandiertem Graphit, sogenanntem Graphitexpandat. Die Herstellung von Graphitexpandat ist hinlänglich bekannt, beispielsweise aus der US 3,404,061 A oder DE 103 41 255 B4. Zur Herstellung von expandiertem Graphit werden Graphiteinlagerungsverbindungen bzw. Graphitsalze wie z.B. Graphithydrogensulfat schockartig erhitzt. Dabei vergrößert sich das Volumen der Graphitpartikel um einen Faktor von ca. 200 - 400 und gleichzeitig sinkt die Schüttdichte auf Werte von 2 - 20 g/l. Das so erhaltene Graphitexpandat besteht aus wurm- bzw. ziehharmonikaförmigen Aggregaten. Anschließend wird das Graphitexpandat unter gerichteter Einwirkung eines Drucks verdichtet, so dass sich die Schichtebenen des Graphits bevorzugt senkrecht zur Einwirkungsrichtung des Drucks anordnen und sich die einzelnen Aggregate untereinander verhaken. Hierdurch wir ein erfindungsgemäßes Flachmaterial erhalten, welches u.a in Form gepresst werden kann und zur Handhabung ausreichend stabil und formtreu ist. Ein für die vorliegende Verwendung geeignetes Flachmaterial wird von der Anmelderin bzw. deren verbundenen Unternehmen unter dem Markennamen SIGRAFLEX hergestellt und vertrieben.

Die Wärmeableiter 6 bis 6"'" respektive das Flachmaterial weisen vorliegend eine Dichte von 1,0 g/cm³ auf, was einer Wärmeleitfähigkeit in Flächenrichtung von 180 bis 190 W/(m K) entspricht. Auch lassen sich die Wärmeableiter 6 bis 6"'" um mindestens 10% in Dickenrichtung komprimieren. Weiter weisen diese Wärmeableiter 6 eine Rückfederung von 10 % bezogen auf ihre Ausgangsdicke in Dickenrichtung auf. Dies bedeutet am Beispiel des Wärmeableiters 6', dass dieser bei einer Volumenausdehnung von z.B. 4% der Batteriezellen 5 und 5' komprimiert wird. Bei einer üblichen Verspannung der Lithium-lonen-Batteriezellen 5, 5', 5" dehnt sich der Wärmeableiter 6' bei der auf die 4-prozentige Volumenausdehnung folgende Volumenverringerung wieder um 8% in Dickenrichtung aus (Rückfedern), wodurch die Volumenänderungen der Batteriezellen 5 und 5' in beide Richtungen - Volumenausdehnung und Volumenverringerung - voll ausgeglichen wird. Der Wärmeableiter 6 liegt also zwischen den Batteriezellen 5, 5' stets vollflächig an den Seitenflächen der Batteriezellen 5, 5' an, so dass stets ein guter Wärmeübergang sichergestellt ist. Die anderen Wärmeableiter 6 bis 6"'" weisen entsprechende Eigenschaften auf und verhalten sich entsprechend.

Um die in die Wärmeableiter 6 eingetragene Wärmeenergie aus den Batteriezellen 5, 5', 5" schnell abtransportieren zu können, ist der Wärmeableiter 6 mit einer unteren Stirnseite 7 in eine Nut 8 im Kühlmodul 4 eingestellt und gut wärmeleitend mit diesem verbunden. Auch die anderen Wärmeableiter 6' bis 6"'" sind auf gleiche Weise gut wärmeleitend in Nuten 8' bis 8"'" mit dem Kühlmodul 4 verbunden. Vorzugsweise kann der Wärmeableiter 6 dort mit einem wärmeleitenden Kleber eingeklebt werden.

Enthält in einer vorteilhaften, nicht gezeichneten Ausführung der Wärmeableiter zumindest im Bereich seiner unteren Stirnseite oder auch eine vollflächige Metallbeschichtung, so kann er auch mit dem Kühlmodul 4 verlötet werden. Alternativ kann der Wärmeableiter 6 auch angeklebt oder angeschweißt werden.

In einer fertigungstechnisch vorteilhaften Ausführung sind die Wärmeableiter 6' bis 6"'" als formstabile und steife Folien oder Platten ausgebildet, was u.a. durch Verdichtung des Flachmaterials der Wärmeableiter 6' bis 6"'" mittels Druck oder auch durch nachträgliche Imprägnierung mit einem Kunststoff erreicht werden kann.

Erfindungsgemäss besteht das Flachmaterial aus einem vor der Verdichtung gebildeten Gemisch aus weitgehend gleichmäßig vermischten Partikeln aus Graphitexpandat und Kunststoff, welche dann miteinander verpresst und ggf. erwärmt und somit zu einer steifen, formstabilen Folie bzw. Platte formbar sind. Somit kann bei der Fertigung des Energiespeichers zunächst der Boden 3 mit den Wärmeableitern 6' bis 6"'" bestückt werden, und anschließend werden die Batteriezellen 5, 5', 5" sowie die weiteren, in Fig. 1 nicht gezeigten Batteriezellen lediglich in durch die Wärmeableiter 6' bis 6"'" gebildeten Taschen 9' bis 9"" eingesteckt. Da die Batteriezellen des Energiespeichers 1 miteinander verspannt werden, ist grundsätzlich keine Verklebung der Wärmeableiter mit den Batteriezellen notwendig, wodurch ein leichter Austausch einzelner oder aller Batteriezellen und ggf. der Wärmeableiter möglich ist.

Vorteilhaft werden die Wärmeableiter 6' bis 6"'" und Batteriezellen 5' bis 5" nur unter geringer Vorspannung bzw. Flächendruck in das Gehäuse 2 eingesetzt, um bei einer Volumenausdehnung der Batteriezellen 5' bis 5" trotz der kompressiblen Wärmeableiter 6' bis 6"'" im Betrieb keine zu hohen mechanischen Spannungen zu erzeugen. Insbesondere bei Lithium-lonen-Batteriezellen können durch die erfindungsgemäßen Wärmeableiter zusätzliche Elemente, die eine Verspannung der Batteriezellen mit gleichzeitiger Ausdehnbarkeit ermöglichen, z.B. mit Federn versehene Spannmittel, vermieden werden.

Eine alternative Ausführung der Erfindung zeigt Fig. 2, welche sich im Wesentlichen durch die Ausformung und Anbringung der Wärmeableiter am Boden 3 des Energiespeichers 1 von der Ausführung nach Fig. 1 unterscheidet. Es werden deshalb gleiche Teile mit gleichen Bezugsziffern gekennzeichnet und im Wesentlichen auf die Unterschiede eingegangen.

Im Gegensatz zu der in Fig. 1 gezeigten Ausführung sind bei der in Fig. 2 gezeigten Ausführung Wärmeableiter 10, 10' als U- bzw. trogförmig geformtes Flachmaterial aus verdichtetem Graphitexpandat ausgebildet. Die trogförmigen Wärmeableiter 10, 10' sind hierbei mit ihren Trogböden auf dem Boden 3 befestigt, bevorzugt durch Verkleben. Enthält das Flachmaterial vorteilhaft einen Kunststoffanteil, zumindest im Bereich des Trogbodens der Wärmeableiter 10, 10', so können diese am Boden 3 angeschweißt werden, ggf. vorteilhaft auch nur stellenweise. Durch die Seitenflächen der Wärmeableiter 10 bzw. 10' bilden sich Taschen 11, 11' und 11" in die die Batteriezellen 5, 5' und 5" eingesteckt werden können. Der Abstand der Seitenflächen eines Wärmeableiters 10 bzw. 10' voneinander wie auch der Abstand von einander zugewandten Seitenflächen der benachbarten Wärmeableiter 10, 10' ist hierbei so groß gewählt, dass einerseits die Batteriezellen 5, 5' und 5" von oben eingesteckt werden können und andererseits die Seitenflächen der Wärmeableiter 10, 10' gut an den entsprechenden Seitenflächen der Batteriezellen 5, 5' und 5" anliegen.

In einer nicht in Fig. 2 gezeigten Ausführung kann der Boden 3 der durch die einander zugewandten Seitenflächen der Wärmeableiter 10, 10' gebildeten mittleren Tasche 11" auch mit einer Graphitexpandatfolie versehen sein, um eine schnelle Wärmeverteilung und -ableitung von Wärmeenergie auch auf der unteren Stirnseite der mittleren Batteriezelle 5' bereitzustellen. Ebenso kann vorteilhafterweise in einer nicht in Fig. 1 gezeigten Ausführung der Boden 3 zwischen den Wärmeableitern 6, 6", 6'" etc. zur besseren Anpassung der Batteriezelle an das Kühlmodul und zur besseren Wärmeabfuhr mit passenden Streifen aus Graphitexpandatfolie oder einer durchgängigen Bodenbedeckung versehen werden.

Soll im Gegensatz zu dem in Fig. 2 gezeigten Ausführungsbeispiel eine noch schnellere und bessere Wärmeverteilung und Wärmeableitung ermöglich werden, wird, wie in Fig. 3 gezeigt, zwischen die Wärmeableiter 10 und 10' ein weiterer, entsprechend als trogförmiges Flachelement ausgebildeter Wärmeableiter 10" eingefügt, wobei der Abstand der Wärmeableiter 10 und 10' voneinander entsprechend vergrößert wird. Die Befestigung des Wärmeableiters 10" und die weitere Ausbildung des Energiespeichers 1 entspricht der oben zu Fig. 2 beschriebenen.

Die in Fig. 4 bzw. Fig. 5 gezeigten Ausführungen des erfindungsgemäßen Energiespeichers 1 entsprechen im Wesentlichen den in Fig. 2 bzw. Fig. 3 gezeigten Ausführungen, unterscheiden sich jedoch durch die Art der Anordnung und Befestigung der Wärmeableiter in dem Gehäuse 2. Es werden deshalb wieder gleiche Bezugszeichen für gleiche Teile verwendet wie in den vorangehenden Figuren 1 bis 3.

Bei der in Fig. 4 gezeigten Draufsicht auf einen elektrischen Energiespeicher 1 werden wieder aus trogförmigen Flachmaterial aus verdichtetem Graphitexpandat bestehende Wärmeableiter 10, 10' verwendet. Diese werden jedoch nicht mit ihren Trogböden auf den Boden 3 gestellt, sondern mit seitlichen Stirnseiten einer Seite des Trogprofils. Die Stirnseiten werden dann wie oben beschrieben am Boden befestigt, wodurch eine gute Wärmeleitfähigkeit sichergestellt wird. In einer alternativen, in Fig. 4 nicht gezeigten Ausführung können am Boden Rinnen 7 vorgesehen werden, um einen sicheren Halt der Stirnseiten der Wärmeableiter 10, 10' zu gewährleisten und die wärmeleitende Verbindung zu verbessern.

Um wie auch bei dem in Fig. 3 gezeigten Ausführungsbeispiel eine noch schnellere und bessere Wärmeverteilung und Wärmeableitung zu ermöglichen, ist bei dem in Fig. 5 gezeigten Ausführungsbeispiel wieder ein weiterer Wärmeableiter 10" unmittelbar zwischen die Wärmeableiter 10 und 10' eingefügt. Ansonsten entspricht die Ausrichtung, Anordnung und Befestigung der Wärmeableiter 10, 10', 10" der in Fig. 4 gezeigten Ausführung.

Bei dem in Fig. 6 in Draufsicht dargestellten weiteren Ausführungsbeispiel der Erfindung wird anstatt einzelner, wie in Fig. 1 gezeigter plattenförmiger Wärmeableiter 6' bis 6"'" oder in Fig. 2 bis 5 gezeigte trogförmiger Wärmeableiter 10, 10', 10" ein einzelnen Wärmeableiter 12 aus einem mäanderförmigen Flachmaterial verwendet. Der Wärmeableiter 12 wird dabei von oben mit einer seiner seitlichen Stirnseiten in das Gehäuse 2 des Energiespeichers 1 eingesetzt, so dass sich wieder Taschen 13, 13', 13", 13"' usw. für die Batteriezellen 5, 5', 5" sowie weitere, nicht gezeigte Batteriezellen bilden. Die Anbindung des Wärmeableiters 12 an den Boden 3 und somit an das Kühlmodul 4 erfolgt wie bei den in Fig. 1 bzw. 4 und 5 beschriebenen Ausführungen. Die in Fig. 6 gezeigte Ausführung weist zusätzlich den Vorteil einer sehr schnellen Montage auf, da die einzelnen Windungen des mäanderförmigen Wärmeableiters 12 bereits in dem gewünschten, an die Breite der Batteriezellen 5, 5', 5" angepassten Abstand voneinander vorgeformt werden können.

Fig. 7 zeigt weitere erfindungsgemäße Ausführungen eines Wärmeableiters. So zeigt Fig. 7 a) einen Wärmeableiter 14 mit einem Querschnitt in Form einer 8. Hierdurch bilden sich zwei Taschen für zwei zylindrische oder rund ausgeführte Batteriezellen 15, wobei sich diese bündig an den Wärmeableiter 14 anschmiegen.

Fig. 7 b) stellt einen Wärmeableiter 16 mit wellenförmigem Querschnitt dar, wobei in dessen Wellentäler beidseitig zylindrische Batteriezellen 17 angeordnet sind, welche sich an das Flachmaterial des Wärmeableiters 16 anschmiegen.

In Fig. 7 c) sind eine Vielzahl von sechseckigen Batteriezellen 19 an im Querschnitt wabenähnlich geformten Wärmeableitern 18 so angeordnet, dass sich mehrere ihrer Seitenflächen an das Flachmaterial der Wärmeableiter 18 anschmiegen. Auch hier werden durch die Form der Wärmeableiter 18 Taschen zum Einstecken der Batteriezellen 19 gebildet.

## Patentansprüche

1. Elektrischer Energiespeicher (1) mit mindestens einer Batteriezelle (5-5";15,17,19) und einem an mindestens einer Außenfläche der Batteriezelle (5-5";15,17.19) angeordnetem, expandierten Graphit enthaltendem Flachmaterial aufweisenden Wärmeableiter (6-6'"":10-10";12;14;16;18) zum Ableiten von Wärme von der Batteriezelle (5-5"; 15,17,19), **dadurch gekennzeichnet, dass** das Flachmaterial aus einem vor der Verdichtung gebildeten Gemisch aus weitgehend gleichmäßig vermischten Graphitexpandat und Kunststoffpartikeln besteht.

2. Energiespeicher (1) nach Anspruch 1, **dadurch gekennzeichnet, dass** die eine oder mehrere Batteriezellen (5-5";15, 17, 19) von einem an ihre Außenkontur angepassten Wärmeabieiter (6-6"";10-10';12: 14; 16; 18) umgeben sind.

3. Energiespeicher (1) nach Anspruch 1 oder 2, **dadurch gekennzeichnet, dass** Stirnseiten (8) und/oder Teilflächen des Flachmaterials des oder der Wärmeableiter (6-6"";10-10";12;14;16;18) mit einem Kühlmodul (4) des Energiespeichers (1) wärmeleitend verbunden sind.

4. Energiespeicher (1) nach Anspruch 3, **dadurch gekennzeichnet, dass** ein Bodenteil (3) eines Gehäuses (2) des Energiespeichers (1) als Kühlelement ausgebildet ist.

5. Energiespeicher (1) nach Anspruch 4, **dadurch gekennzeichnet, dass** mindestens eine Innenwand des Gehäuses (2) mit dem graphithaltigen Flachmaterial zur Kontaktierung von Außenflächen einiger oder mehrerer Batteriezellen (5-5"; 15, 17, 19) zur Ableitung von Wärme von den Batteriezellen (5-5";15, 17, 19) verkleidet ist.

6. Energiespeicher (1) nach Anspruch 4 oder 5, **dadurch gekennzeichnet, dass** ein oder mehrere trogförmige (10-10"), wellenförmige (16), mäanderförmige (12) oder wabenähnliche (18) Wärmeableiter mit einer ihrer Stirnseiten mit dem Bodenteil (3) wärmeleitend verbunden sind.

7. Energiespeicher (1) nach einem der Ansprüche 1 bis 6, **dadurch gekennzeichnet, dass** die Batteriezellen (5-5", 15, 17, 19) Lithium-Ionen-Zellen sind.

8. Energiespeicher (1) nach einem der Ansprüche 1 bis 7, **dadurch gekennzeichnet, dass** die Wärmeabieiter (6-6"";10-10';12;14;16;18) und die Batteriezellen (5-5"; 15,17,19) im betriebslosen Zustand des Energiespeichers (1) so miteinander verspannt sind, das das Flachmaterial des oder der Wärmeahleifer (6-6"";10-10';12;14;16;18) in Dickenrichtung um höchstens 1% bezogen auf seine Ausgangsdicke, komprimiert ist

## Claims

1. An electrical energy storage device (1) with at least one battery cell (5-5"; 15, 17, 19) and a heat dissipator (6-6""'; 10-10"; 12; 14; 16; 18) for removing heat from the battery cell (5-5"; 15, 17, 19), said heat dissipator comprising an expanded graphite-containing flat material and being disposed on at least one external face of the battery cell (5-5"; 15, 17, 19), **characterised in that** the flat material comprises a mixture of, for the most part, uniformly mixed graphite expandate and plastic particles, said mixture being formed before the compaction.

2. The energy storage device (1) according to claim 1, **characterized in that** the one or more battery cells (5-5"; 15, 17, 19) are surrounded by a heat dissipator (6-6"'"; 10-10"; 12; 14; 16; 18) adapted to their external contour.

3. The energy storage device (1) according to claim 1 or 2, **characterised in that** front sides (8) and/or partial faces of the flat material of the heat dissipator or dissipators (6-6"'"; 10-10"; 12; 14; 16; 18) are connected in a heat-conducting manner to a cooling module (4) of the energy storage device (1).

4. The energy storage device (1) according to claim 3, **characterised in that** a base part (3) of a housing (2) of the energy storage device (1) is constituted as a cooling element.

5. The energy storage device (1) according to claim 4, **characterised in that** at least one internal wall of the housing (2) is lined with the graphite-containing flat material for the contacting of external faces of some or more battery cells (5-5"; 15, 17, 19) for the removal of heat from the battery cells (5-5"; 15, 17, 19).

6. The energy storage device (1) according to claim 4 or 5, **characterised in that** one or more trough-shaped (10-10"), unctulating (16), meandering (12) of honeycomb-like (18) heat dissipators are connected with one of their front sides to the base part (3) in a heat-conducting manner.

7. The energy storage device (1) according to any one of claims 1 to 6, **characterised in that** the battery cells (5-5"; 15, 17, 19) are lithium ion cells.

8. The energy storage device (1) according to any ane of claims 1 to 7, **characterised in that** the heat dissipators (6-6""'; 10-10"; 12; 14; 16; 18) and the battery cells (5-5"; 15, 17, 19) are clamped together in the non-operational state of the energy storage device (1) in such a way that the flat material of the heat dissipator or dissipators (6-6""'; 10-10"; 12; 14; 16; 18) is compressed only slightly in the thickness direction, preferably by at most 1% related to its initial thickness.

## Revendications

1. Accumulateur d'énergie électrique (1) avec au moins une cellule de batterie (5 - 5", 15, 17, 19) et un dissipateur de chaleur (6 - 6""'; 10 - 10" ; 12 ; 14 ; 16 ; 18), destiné à la dissipation de la chaleur de la cellule de batterie (5 - 5", 15, 17, 19) et présentant un matériau plat qui contient du graphite expansé, disposé au niveau d'au moins une surface extérieure de la cellule de batterie (5 - 5", 15, 17, 19), **caractérisé en ce que** le matériau plat est composé d'un mélange formé avant la densification qui comprend dans une large mesure et mélangés de manière homogène du graphite expansé et des particules de matière synthétique.

2. Accumulateur d'énergie (1) selon la revendication 1, **caractérisé en ce que** l'une ou les plusieurs cellules de batterie (5 - 5", 15, 17, 19) sont entourées par un dissipateur de chaleur (6 - 6""'; 10 - 10" ; 12 ; 14 ; 16 ; 18) adapté à leur contour extérieur,

3. Accumulateur d'énergie (1) selon la revendication 1 ou 2, **caractérisé en ce que** des parties frontales (8) et/ou des surfaces partielles du matériau plat du ou des dissipateurs de chaleur (6 - 6""'; 10 - 10" ; 12 ; 14 ; 16 ; 18) sont reliées à un module de refroidissement (4) de l'accumulateur d'énergie (1), tout en étant conductrices de chaleur.

4. Accumulateur d'énergie (1) selon la revendication 3, **caractérisé en ce qu'**une partie de fond (3) d'un boîtier (2) de l'accumulateur d'énergie (1) est conçue comme un élément de refroidissement.

5. Accumulateur d'énergie (1) selon la revendication 4, **caractérisé en ce que** au moins une paroi intérieure du boîtier (2) est revêtue du matériau plat qui contient du graphite afin de servir de mise en contact pour les surfaces extérieures de quelques-unes ou de plusieurs cellules de batterie (5 - 5", 15, 17, 19) en vue de dissiper la chaleur des cellules de batterie (5 - 5", 15, 17, 19).

6. Accumulateur d'énergie (1) selon la revendication 4 ou 5, **caractérisé en ce qu'**un ou plusieurs dissipateurs de chaleur en forme d'auge (10 - 10"), en forme ondulée (16), en forme de méandres (12) ou en structure alvéolaire (18) sont reliés à la partie de fond (3) par l'une de leurs parties frontales, tout en étant conducteurs de chaleur.

7. Accumulateur d'énergie (1) selon l'une des revendications 1 à 6, **caractérisé en ce que** les cellules de batterie (5 - 5", 15, 17, 19) sont des cellules au lithium-ion.

8. Accumulateur d'énergie (1) selon l'une des revendications 1 à 7, **caractérisé en ce que** les dissipateurs de chaleur (6 - 6""'; 10 - 10" ; 12 ; 14 ; 16 ; 18) et les cellules de batterie (5 - 5", 15, 17, 19) sont, à l'état inactif de l'accumulateur d'énergie (1), serrés de telle sorte les uns aux autres que le matériau plat du ou des dissipateurs de chaleur (6 - 6""'; 10 - 10" ; 12 ; 14 ; 16 ; 18) est comprimé dans la direction de l'épaisseur d'au plus 1 % par rapport à son épaisseur initiale.
